# EUROPEAN PATENT APPLICATION

(11) **EP 0 590 890 A2**
(43) Date of publication of application: **06.04.1994**
(21) Application number: 93307564.0
(22) Date of filing: 23.09.1993
(51) Int. Cl.: C08G 18/67, C08G 18/32, C09D 175/04, C08F 299/06, C08G 18/08

(54) **Urethane acrylates and methacrylates and compostions containing them**

(30) Priority: 23.09.1992 GB 9220088
(71) Applicant: SERICOL LIMITED, Broadstairs, Kent CT10 2PA (GB)
(72) Inventor: Gould, Nigel Paul, Broadstairs, Kent (GB); Thorpe, Anthony Stephen, Barnt Green, Birmingham (GB)
(74) Representative: Claisse, John Anthony, Dr.

(57) **Abstract**

Ionomeric urethane acrylates and methacrylates including quaternary amino groups, the amine value of the unquaternized urethanes being from 20 to 300mg KOH/g and radiation curable compositions including such an ionomeric urethane acrylate or methacrylate in admixture with water. the ionomeric urethane acrylates and methacrylates have shown aqueous solubility over wide concentration ranges, thereby enabling compositions containing them to contain and be diluted with water.

## Description

This invention concerns urethane acrylates and methacrylates, and compositions containing them.

Urethane acrylates and methacrylates have been used hitherto in the preparation of various types of radiation curable coating compositions, for example inks and varnishes. In order to reduce the coating weight of such compositions, it has been necessary to add a solvent. However, organic solvents are environmentally undesirable, and compositions have therefore been proposed hitherto which can be diluted with water. Although a number of water-based radiation curable coating compositions have been proposed, they often have limited stabilities leading to phase separation.

According to the present invention there are provided ionomeric urethane acrylates and methacrylates including quaternary amino groups, the amine value of the unquaternized urethanes being from 20 to 300mg KOH/g.

The invention further provides radiation curable compositions comprising an ionomeric urethane acrylate or methacrylate in accordance with the present invention and water.

Ionomeric urethane acrylates and methacrylates in accordance with the present invention have shown aqueous solubility over wide concentration ranges, thereby enabling compositions containing them to contain and be diluted with water, and apparatus with which they have been used to be cleaned with water without the necessity for organic solvents. They have furthermore shown good stability in aqueous solution. Compositions in accordance with the present invention can therefore be formulated to enable them to be diluted with water. In addition, compositions in the form of inks have shown good dot formation when applied to substrates by screen printing.

The quaternary ammonium groups of the ionomers of the present invention are in general present as a result of quaternizing amino functionality, preferably tertiary amine functionalilty, introduced into the urethane acrylates and methacrylates during formation of the urethane functionality, e.g. by reacting a poly-isocyanate with an alcohol including amino functionality. This amine functionality can be present in a variety of alcohols, for example in a polyol used to oligomerize the poly-isocyanate or in a monohydric alcohol including amino groups which can be used to increase the relative proportion of ionomeric functionality in the urethanes.

The amount of amine functionality in the ionomers of the present invention is such that before quaternization the urethanes have an amine value of from 20 to 300mg KOH/g, preferably from 40 to 300, and advantageously from 60 to 150mg KOH/g.

The quaternary ammonium groups can be formed by neutralizing the corresponding urethane acrylate or methacrylate containing amino functionality using an organic or inorganic acid. Organic acids, e.g. carboxylic acids, including ethylenic unsaturation are preferred, for example acrylic, methacrylic or maleic acids. It is furthermore generally preferred that at least 90 percent of the anionic moiety of the quaternary amine groups should include ethylenic usaturation which can subsequently be polymerized when the acrylate or methacrylate groups of the urethanes of the present invention are subsequently radiation cured.

It is preferred that at least 40 percent of the amine functionality of the urethanes is quaternized in order to impart solubility thereto, and more preferably from 85 to 95 percent, and especially about 90 percent.

Polyols including amine functionality which can be used to produce urethane groups of urethane acrylates and methacrylates in accordance with the present invention, and of course amine functionality, are preferably poly-(mono-hydroxyalkyl) tertiary-amines. Examples of such amines which can be used include N-methyl-N,N-diethanolamine, N,N,N-tri-ethanolamine, N,N,N',N'-tetrakis-(2-hydroxyethyl) ethylenediamine, N,N,N',N'-tetrakis-(2-hydroxypropyl) ethylenediamine, N,N',N'-tris-(2-hydroxyethyl)-N-tallow-1,3-diaminopropane, ethylene oxide, propylene oxide and caprolactone extended derivatives of such amines, and mixtures of such amines and/or extended derivatives thereof.

Urethanes in accordance with the present invention preferably include groups derived from at least one tertiary mono-(hydroxyalkyl)amine, such amines when quaternized generally serving to increase the water solubility of the ionomers. Examples of tertiary mono-(hydroxyalkyl)amines which can be used include N,N-dimethylethanolamine, N,N-diethylethanolamine, N,N-dipropylethanolamine, 3-hydroxy-1-methylpiperidine, 4-(2-hydroxyethyl)morpholine, 1-(2-hydroxyethyl)pyrrolidin-2-one, ethylene oxide, propylene oxide and caprolactone extended derivatives of such amines, and mixtures of such amines and/or extended derivatives thereof.

The poly-isocyanates from which urethanes in accordance with the present invention are derived, usually di-isocyanates, are preferably aliphatic poly-isocyanates since these usually result in urethanes having lower viscosities than do urethanes derived from aromatic poly-isocyanates. The aliphatic poly-isocyanates may, however, include aromatic groups. Examples of poly-isocyanates which can be used include xylylene di-isocyanate, 1-isocyanato-3-isocyanatomethyl-3,5,5-(tri-methyl)cyclohexane, 3,3'-(di-methyl)diphenylmethane-4,4'-di-isocyanate, 2,4-tolylene di-isocyanate, 2,6-tolylene di-isocyanate, 2,2,4-(tri-methyl)hexamethylene di-isocyanate, 2,4,4-(tri-methyl)hexamethylene di-isocyanate, methylene-bis-4-(cyclo-hexyl)isocyanate, 1,1-hexamethylene di-isocyanate, 1,1-octamethylene di-isocyanate, meta-(tetra-methyl)xylene di-isocyanate, para-(tetra-methyl)xylene di-isocyanate, methylene-bis-phenyl di-isocyanate, 1,5-naphthylene di-isocyanate, meta-phenylene di-isocyanate, and mixtures thereof.

The acrylic and/or methacrylic functionality of ionomeric urethanes in accordance with the present invention is preferably introduced by reaction of the poly-isocyanate with a hydroxy acrylate or hydroxy methacrylate, preferably a hydroxyalkyl acrylate or hydroxyalkyl methacrylate, e.g. 2-hydroxyethyl acrylate, 2-hydroxyalkyl methacrylate, hydroxypropyl acrylate, hydroxypropyl methacrylate, hydroxybutyl acrylate, hydroxybutyl methacrylate, and mixtures of two or more thereof.

In addition to reacting the poly-isocyanate with a mono-(hydroxyalkyl) tertiary amine for the purposes of adjusting the amine functionality of the urethanes which are quaternized in accordance with the present invention, it is also possible to adjust the amine functionality by reacting a polyol with isocyanate groups present at various stages of the reaction sequence which produces urethane functionality from the original isocyanate functionality. Examples of polyols which can be used for the purpose include aliphatic polyols which can contain two or more hydroxy groups, e.g. ethylene glycol, neo-pentyl glycol, glycerol, di-pentaerythritol, and di-(trimethylol)propane.

As will be appreciated by those skilled in the art, reaction of the poly-isocyanate with the various hydroxy group containing compounds to form urethane groups will in general be effected in the presence of a catalyst for the reaction, for example di-butyl tin di-laurate. The reaction is also preferably effected in the presence of a free radical inhibitor, for example phenothiazine, 2,6-di-(tert-butyl)-4-methylphenol, 4-methoxyphenol or hydroquinone.

If desired, a water soluble or partially water soluble ethylenically unsaturated monomer can be present during one or more of the various reactions described above, such monomers then being present in admixture with the ionomeric urethane in accordance with the present invention which is eventually produced.

Although ionomeric urethane acrylates and methacrylates in accordance with the present invention can be prepared by reacting the various reactants in any desired order, they are preferably prepared by reacting the various reactants in the following series of reaction steps.

In an initial step of the preferred series of steps, a poly-isocyanate is partially reacted with a mono-hydroxy acrylate, optionally in the presence of a tertiary amine including only one N-(mono-hydroxyalkyl) group, the relative amounts of the reactants present during this step preferably being such that from 45 to 55 percent, and more preferably about 50 percent, of the isocyanate groups in the poly-isocyanate remain unreacted. This reaction step is preferably effected in the presence of a free radical inhibitor and a catalyst. If desired, a hydrophillic ethylenically unsaturated monomer can also be present as a diluent during this reaction step.

In a second reaction step, the product of this reaction is reacted with at least one poly-(hydroxyalkyl) tertiary amine. The amount of such hydroxy group-containing compounds which are used is preferably such that substantially none of the isocyanate groups of the original poly-isocyanate remain when the reaction is complete. The reaction is also preferably effected such that the isocyanate and hydroxy functionality of the reactants in this second step is substantially equal. If desired, further ethylenically unsaturated monomer and/or a solvent can be added before this reaction step is effected.

A quaternerization step is then effected by reacting amine functionality of the product with at least one acid.

Compositions in accordance with the present invention will include at least one urethane ionomer in accordance with the present invention in admixture with water. In addition, compositions in accordance with the present invention can include other components, for example depending on the type of composition and the intended method of curing.

Compositions in accordance with the present invention can be in a variety of forms, varnish compositions and inks being particularly preferred. Ink compositions will, of course, include one or more pigments in addition to any other materials which may be present in the compositions.

Although compositions in accordance with the present invention can be formulated for curing by an electron beam, they are preferably formulated to be curable using actinic radiation, for example ultra violet light. Compositions which are curable using actinic radiation will usually include a free radical initiator, for example benzophenone, benzoin methyl ether, an acyl phosphine oxide, thioxanthone or a derivative of one or more thereof. The amount of free radical initiator used is preferably from 2 to 10 percent by weight of the compositions.

In order to increase the speed of curing of compositions in accordance with the present invention which include a Norrish Type II photoinitiator, it is generally preferred to include an amine synergist which can be a liquid or a solid. Preferred amine synergists include solid aminobenzoates, for example alkyl 4-(di-alkylamino)benzoates in which the alkyl groups of the di-alkylamino groups are selected from methyl, ethyl or propyl groups, e.g. ethyl 4-(di-ethylamino)benzoate. The amount of amine synergist present is preferably from 2 to 10 percent by weight of the composition.

The coating lay and flow of compositions in accordance with the present invention can usually be improved by the inclusion of a surfactant which can also serve to reduce foaming of the compositions. Examples of surfactants which can be used include silicones and/or modified silicone fluids, for example polymethylsiloxanes, and oil-based defoamers. It is usually preferred to include up to 15 percent by weight of surfactant based on the weight of the compositions.

Compositions in accordance with the present invention can, if desired, include one or more fillers, for example to modify the viscosity of the compositions, e.g. to increase their coating thixotropy, or to modify the gloss of cured coatings produced therefrom. Examples of fillers which can be used include powders of silica, magnesium silicate, calcium carbonate or modified clays. It is usually preferred to include up to 15 percent by weight of filler based on the weight of the compositions.

Compositions in accordance with the present invention preferably include at least one ethylenically unsaturated monomer. Examples of such monomers include acrylic monomers, which can include one or more unsaturated groups, e.g. straight or branched chain alkyl acrylates including iso-bornyl acrylate, iso-decyl acrylate, octadecyl acrylate, lauryl acrylate, stearyl acrylate and hexanediol di-acrylate; polyether di-acrylates, e.g. having four ethyleneoxy groups, and including alkyleneoxy di-acrylates, e.g. tri-ethyleneglycol di-acrylate; acrylates of triols and alkoxy-extended triols, e.g. trimethylolpropane triacrylate and glyceryl triacrylate; and N-methylolacrylamide. The compositions preferably include from 5 to 35 percent by weight of ethylenically unsaturated monomers based on the weight of the compositions.

Compositions in accordance with the present invention can include a viscosity modifier in addition to any surfactant and/or filler which may be present, in particular to reduce the viscosity of, or to thin, the compositions. Examples of viscosity modifiers which can be used include N-vinyl-2-pyrrolidone and N-vinylcaprolactam, the latter usually being used in admixture with one or more liquid ethylenically unsaturated monomers since it is a solid at ambient temperatures. The preferred amount of viscosity modifier is up to 15 percent by weight of the compositions.

The following Examples are given by way of illustration only. All parts are by weight based on the total weight of the mixture concerned, unless indicated otherwise.

### Example 1

320g of butyl-cellosolve acetate, 2508g of a 50:50 mix by weight of 2,2,4- and 2,4,4-tetra-methyl hexamethylene di-isocyanate, 21g of 2,6-di-(tert-butyl)-4-methylphenol and 2.2g of di-butyl tin di-laurate (DBTD) were introduced into a 10 litre flask fitted with a mechanical stirer, a thermometer, a condenser and a gas inlet, the flask being in an electric heating mantle. The mixture was agitated and sparged with dry air, and it was then heated to 45°C using the heating mantle, at which point the heating was stopped and the mantle removed. The sparging was continued throughout the following reaction steps prior to the neutralization step.

1140g of N-methyl-N,N-diethanolamine were then added dropwise over a two hour period during which time the temperature of the mixture increased to 86°C before being allowed to cool to 61°C. 438g of 2-hydroxyethyl acrylate were then added dropwise over a two hour period during which time the temperature of the mixture increased to 82°C before being allowed to fall to 56 to 60°C. The heating mantle was then replaced, and the reaction mixture was held at 55 to 60°C for a further three hours. The temperature of the reaction mixture was then raised to and held at 90°C until infra-red analysis of the reaction mixture indicated that all of the di-isocyanate had reacted. The amine value of the mixture at this point was 121mg KOH/g.

The mixture was cooled to 80°C and a mixture of 605g of acrylic acid and 4393g of distilled water was then added over a period of 30 minutes, which was sufficient to neutralize 90 percent of the amine functionality of the mixture. The resultant mixture was cooled to 50°C with agitation, and therafter without agitation. The viscosity of the product was 18 poise at 25°C, and the non-volatile content was 50 percent.

After heating a sample of the neutralized product for 24 hours at 80°C, it remixed readily following cooling to ambient temperature.

90g of the neutralized product were mixed with 5g of distilled water and 5g of 4-(3-dimethylamino-2-hydroxypropoxy)-1-methyl-9H-thioxanthan-9-one methochloride. The resultant varnish was then coated onto paper by screen printing, and thereafter passed under a UV lamp to effect curing. The cured print was tack free, and it resisted 100 water double rubs.

### Example 2

1226g of meta-(tetra-methyl)xylene di-isocyanate, 475 g of ethoxylated trimethylolpropane triacrylate, 13.3g of 2,6-di-(tert-butyl)-4-methylphenol and 1.5g of di-butyl tin di-laurate (DBTD) were introduced into a 5 litre flask fitted with a mechanical stirer, a thermometer, a condenser and a gas inlet, the flask being in an electric heating mantle. The mixture was agitated and sparged with dry air, the sparging being continued throughout the following reaction steps prior to the neutralization step. The reaction mixture was then heated to 50°C using the heating mantle, at which point the heating was stopped and the mantle removed.

220g of N,N-dimethylethanolamine were then added dropwise over a one hour period during which time the temperature of the mixture increased to 68°C before being allowed to cool to 55°C, at which point the heat was re-applied to bring the temperature of the reaction mixture to 55 to 60°C for a further one hour.

864g of caprolactone-extended 2-hydroxyethyl acrylate (Tone M100 - ex UCB) were then added dropwise over a two hour period during which time the temperature of the mixture was maintained at between 55 and 60°C.

After a further three hours at this temperature, 366g of N,N,N',N'-tetrakis-(2-hydroxypropyl) ethylenediamine were added over a period of one hour, and the mixture was held at a temperature of 55 to 60°C for a further hour. The temperature of the reaction mixture was then raised to and held at 90°C until infra-red analysis of the reaction mixture indicated that all of the di-isocyanate had reacted. The amine value of the mixture at this point was 88.2mg KOH/g.

The mixture was cooled to 80°C and a mixture of 326g of acrylic acid and 602g of distilled water was then added over a period of 30 minutes, which was sufficient to neutralize 90 percent of the amine functionality of the product. The viscosity of the neutralized product was 420 poise at 25°C.

A sample of the mixture was adjusted to a non-volatiles content of 50 percent by the addition of de-ionised water, and the hydrolytic stability of the mixture was assessed by heating it for 24 hours at 80°C, after which it remixed readily following cooling to ambient temperature.

The following ingredients were mixed using a variable speed stirrer until a homogeneous mixture had been obtained. The mixture was then passed over a triple roll mill to disperse the pigment more fully until the mixture had a Hegman Gauge of 2 to 3 microns.

| | |
|---|---|
| neutralized product | 8.0 |
| N-vinyl-2-pyrrolidone | 2.0 |
| Copper phthalocyanine β-form C.I. Pigment Blue 15 | 2.0 |

The following ingredients were then added, and the mixture was stirred until homogeneous.

| | |
|---|---|
| neutralized product | 34.0 |
| 1-(4-iso-propylphenyl)-2-hydroxy-2-methylpropan-1-one | 5.0 |
| water | 40.0 |
| hydrophilic clay rheology additive | 4.0 |
| micronised polylethylene wax | 3.0 |
| hydrocarbon oil-based defoamer | 2.0 |

The result was a cyan ink which, when thinned with 30 percent by volume with water and screen printed, exhibited good dot formation with low film weight combined with good cure speed and excellent screen stability. The ink was also capable of being thinned and cleaned up using water.

### Example 3

350g of meta-(tetra-methyl)xylene di-isocyanate, 120g of ethoxylated trimethylolpropane triacrylate, 6g of 2,6-di-(tert-butyl)-4-methylphenol and 0.6g of di-butyl tin di-laurate (DBTD) were introduced into a 2 litre flask fitted with a mechanical stirer, a thermometer, a condenser and a gas inlet, the flask being in an electric heating mantle. The mixture was agitated and sparged with dry air, the sparging being continued throughout the following reaction steps prior to the neutralization step. The reaction mixture was then heated to 50°C using the heating mantle, at which point the heating was stopped and the mantle removed.

43g of N,N-dimethylethanolamine were then added dropwise over a one hour period during which time the temperature of the mixture increased to 62°C before being allowed to cool to 55°C, at which point the heat was re-applied to bring the temperature of the reaction mixture to 55 to 60°C for a further one hour.

329g of caprolactone-extended 2-hydroxyethyl acrylate (Tone M100 - ex UCB) were then added dropwise over a two hour period during which time the temperature of the mixture was maintained at between 55 and 60°C.

After a further two hours at this temperature, 358g of ethoxylated N,N',N'-tris-(2-hydroxyethyl)-N-tallow-1,3-diaminopropane were added, and the temperature of the reaction mixture was then raised to and held at 90°C until infra-red analysis of the reaction mixture indicated that all of the di-isocyanate had reacted. The amine value of the mixture at this stage was 65.8mg KOH/g.

The mixture was cooled to 80°C and a solution of 72g of maleic acid in 100g of distilled water and 20g of acrylic acid was then added over a period of 30 minutes, which was sufficient to neutralize 90 percent of the amine functionality of the product.

A sample of the neutralized mixture was adjusted to a non-volatiles content of 50 percent by the addition of de-ionized water, and the hydrolytic stability of the mixture was assessed by heating it for 24 hours at 80°C, after which it remixed readily following cooling to ambient temperature.

70g of the neutralized product were mixed with 25g of distilled water and 5g of 4-(3-dimethylamino-2-hydroxypropoxy)-1-methyl-9H-thioxanthan-9-one methochloride. The resultant varnish was then coated onto paper by screen printing, and thereafter passed under a UV lamp to effect curing. The cured print was tack free, and it resisted 100 water double rubs.

### Example 4 (Comparison)

The procedure of Example 1 was repeated to produce a quaternized product, except that only 570g of N-methyl-N,N-diethanolamine were used and the amount of 2-hydroxyethyl acrylate was increased to 1658.8g to maintain the stoichiometry. The amine value of the product prior to neutralization was 56.7mg KOH/g. A 50 percent aqueous solution of the neutralized product was heated for 24 hours at 40°C after which the solution, which had separated, would not remix.

### Example 5 (Comparison)

The procedure of Example 2 was repeated to produce a quaternized product, except that 313g of di-trimethylol propane were used in place of the N,N,N',N'-tetrakis-(2-hydroxypropyl) ethylenediamine. The amine value of the product prior to neutralization was 44.55mg KOH/g. Similar results were obtained for the product as were obtained for the product of Example 4.

### Example 6 (Comparison)

The procedure of Example 5 was repeated except that the N,N-(di-methyl)ethanolamine was replaced by 287g of 2-hydroxyethyl acrylate. The amine value of the product was 0mg KOH/g before neutralization, and the product was completely insoluble in water.

## Claims

1. Ionomeric urethane acrylates and methacrylates including quaternary ammonium groups, the amine value of the amine groups before quaternization being from 20 to 300mg KOH/g.

2. Urethanes according to claim 1, having an amine value of from 40 to 300mg KOH/g before quaternization.

3. Urethanes according to claim 1 or claim 2, having an amine value of from 60 to 150mg KOH/g before quaternization.

4. Urethanes according to any of the preceding claims, wherein the quaternary ammonium groups are quaternized tertiary amino groups.

5. Urethanes according to and of the preceding claims, wherein the quaternary ammonium groups are quaternized with a carboxylic acid.

6. Urethanes according to claim 5, wherein the carboxylic acid comprises an ethylenically unsaturated acid.

7. Urethanes according to claim 6, wherein the carboxylic acid comprises acrylic acid or maleic acid.

8. Urethanes according to any of the preceding claims, wherein at least 40 percent of the amine functionality thereof is quaternized.

9. Urethanes according to claim 8, wherein from 85 to 95 percent of the amine functionality thereof is quaternized.

10. Urethanes according to any of the preceding claims, including units derived from at least one polyol.

11. A process for the preparation of inomeric urethane acrylates and methacrylates including quaternary ammonium groups which comprises
(a) reacting a poly-isocyanate with a mono-hydroxyalkyl acrylate or mono-hydroxyalkyl methacrylate, optionally in the presence of a mono-(hydroxyalkyl) tertiary amine;
(b) reacting the product with a poly-(hydroxyalkyl) tertiary amine; and
(c) quaternizing the product with an acid;.
the reactants being used in proportions such that the amine value of the urethanes before neutralization are from 20 to 300mg KOH/g.

12. A process according to claim 11, wherein the quaternization in step (c) is effected to quaternize at least 40 percent of the tertiary amine functionality of the product from step (b).

13. A process according to claim 11 or claim 12, wherein from 85 to 95 percent of the amine functionality is quaternized.

14. A process according to any of claims 11 to 13, wherein the quaternization is effected using an unsaturated carboxylic acid.

15. A radiation curable composition comprising an ionomeric urethane acrylate or methacrylate and water.

16. A composition according to claim 15, in the form of an ink or a varnish.
